# FASCICULE DE BREVET EUROPEEN

(11) **EP 0 839 599 B1**
(45) Date de publication et mention de la délivrance du brevet: **27.03.2002**
(21) Numéro de dépôt: 97402570.2
(22) Date de dépôt: 29.10.1997
(51) Int. Cl.: B23K 35/38, G05D 11/13

(54) **Procédé et installation de régulation de la composition de l'atmosphère d'une enceinte**
Methode und Gerät zur Regelung der Zusammensetzung der Atmosphäre eines Gehäuses
Method and apparatus for controlling the constitution of the atmosphere of an enclosure

(30) Priorité: 31.10.1996 FR 9613331
(43) Date de publication de la demande: 06.05.1998
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Verbockhaven, Denis, 75015 Paris (FR)
(74) Mandataire: Mellul-Bendelac, Sylvie Lisette

(56) Documents cités:
- EP-A- 0 100 649
- EP-A- 0 549 262
- FR-A- 2 691 678

## Description

La présente invention concerne un procédé de régulation de la composition d'une atmosphère dans une enceinte, par exemple un four conformement au preambule de la revendication 1, et une installation de regulation de la teneur d'une enceinte en un élément donné conformement au preambule de la revendication 13.

A titre illustratif, on peut citer ici l'exemple de la régulation de la teneur en oxygène d'atmosphères à base d'azote utilisées pour des applications de traitement thermique de pièces métalliques ou céramiques, ou encore pour des opérations de brasage voir EP-A-549 262.

Ce document EP-549 262 décrit une méthode de brasage de composants électroniques par refusion dans un four continu, sous une atmosphère à base d'un gaz inerte comportant moins de 10000 ppm d'oxygène et de 0,5 à 3 % de vapeur d'eau.

Les auteurs utilisent une source unique de gaz humide obtenue soit par bullage d'un gaz inerte dans une réserve d'eau, soit par réaction catalytique entre de l'hydrogène et une source impure du gaz inerte comportant un résiduel d'oxygène.

Le contrôle et la régulation de la teneur en vapeur d'eau sont alors obtenus dans le premier cas par un contrôle de la température de la réserve d'eau, et dans le second cas par le contrôle et la maîtrise de la stoechiométrie de la réaction H₂/O₂.

Le choix d'une atmosphère de composition donnée, pour effectuer dans l'enceinte une certaine opération (par exemple une opération de traitement thermique), conduit le plus souvent à la définition d'au moins une teneur maximale en un élément donné dans cette atmosphère.

A titre d'exemple, le choix d'une atmosphère à base d'azote pour un procédé déterminé conduit très souvent à la définition d'une teneur maximale en oxygène dans cette atmosphère. On peut considérer ici à titre illustratif le cas de l'assemblage par brasage de composants électroniques sur circuit imprimé à l'aide d'une pâte à braser, dans des fours dits de « refusion » (en anglais « reflow soldering »), pour lesquels l'utilisation de certaines formulations de pâtes à braser donne lieu à des recommandations en termes de teneur maximale en oxygène tolérable dans l'atmosphère de brasage.

On conçoit alors que l'atmosphère à base d'azote requise sera toujours obtenue au moyen d'une source d'azote dont la teneur en oxygène est inférieure à la teneur maximale admissible dans l'atmosphère du procédé, ceci compte tenu des précautions classiques prises en terme d'injection et de réglage (débits mis en oeuvre, répartition géographique des injections, étanchéité de l'enceinte, etc...).

On sait par ailleurs, que pour une source de gaz donnée et une configuration donnée d'enceinte et de réglage des paramètres de fonctionnement de cette enceinte, la teneur en oxygène (et plus généralement en l'élément considéré) dans l'atmosphère du procédé va couramment varier, en fonction notamment de la cadence de production de l'enceinte de traitement, ou encore du fait de conditions extérieures telles que la création de courants d'air dans l'atelier où est localisée l'enceinte en question.

On assiste pourtant de plus en plus à une volonté très clairement affichée des utilisateurs d'aller vers un meilleur contrôle de leurs procédés, afin d'atteindre une meilleure reproductibilité de la qualité des pièces obtenues en sortie d'enceinte.

Un tel contrôle de procédé passe alors nécessairement par un contrôle de l'atmosphère mise en oeuvre à l'intérieur de l'enceinte, le contrôle de la qualité des sources de gaz approvisionnées étant clairement insuffisant.

En considérant l'exemple des atmosphères à base d'azote, à teneur contrôlée en oxygène, les solutions existantes permettant d'assurer un tel contrôle de l'atmosphère peuvent essentiellement être classées en deux catégories :

### - Solution n° 1 : excès de qualité

Selon cette première solution, on met en oeuvre un réglage (débit et répartition des injections) et une source d'azote de pureté en oxygène donnée tels que pour toutes variations ou perturbations intervenant dans le procédé, la teneur résiduelle en oxygène mesurée dans l'atmosphère du procédé soit toujours inférieure à la teneur maximale admissible.

A titre d'exemple, on pourra mettre ici en oeuvre un débit élevé d'azote d'origine cryogénique, alors que le procédé utilisateur pourrait parfaitement tolérer quelques milliers voire quelques dizaines de milliers de ppm d'oxygène résiduel.

### - Solution n° 2 : contrôle d'atmosphère par régulation de débit

Selon cette seconde solution, on met en oeuvre un certain réglage (débit et répartition des injections de gaz) et une source d'azote de pureté en oxygène donnée, suffisamment limites pour qu'il existe effectivement des variations ou perturbations dans le fonctionnement de l'enceinte qui puissent engendrer dans l'atmosphère du procédé un dépassement de la teneur résiduelle en oxygène maximale admissible.

La source de gaz est alors utilisée en combinaison avec un système de régulation permettant, lorsque la teneur en oxygène résiduelle mesurée dans l'atmosphère de l'enceinte dépasse un seuil haut donné, d'augmenter le débit de gaz dans l'enceinte (se retrouvant alors dans la situation « atmosphère en excès »), pour ne diminuer à nouveau le débit de gaz injecté dans l'enceinte que lorsque la teneur en oxygène mesurée dans l'atmosphère du procédé est repassée en dessous du seuil.

On conçoit alors d'une part que la première solution, comme toute les solutions mettant en oeuvre un excès de qualité, est inutilement coûteuse, sans pour autant éliminer totalement le risque qu'une perturbation imprévue conduise à un dépassement de la teneur résiduelle en oxygène maximale admissible dans l'atmosphère du procédé.

La seconde solution quant à elle permet certes de mieux adapter la pureté de la source de gaz et/ou le débit mis en oeuvre, aux besoins réels du procédé, mais peut entraîner en définitive une consommation totale en gaz relativement élevée. On peut noter de plus le fait que modifier ainsi les débits mis en oeuvre dans l'enceinte lors d'un dépassement du seuil d'oxygène donne nécessairement lieu à des phénomènes d'instabilité du procédé :
- la variation de débit induite est d'une part source de turbulences favorisant la création d'entrées d'air dans l'enceinte;
- une telle variation du débit mis en oeuvre entraîne par ailleurs une variation du transfert thermique (convectif) réalisé à l'intérieur de l'enceinte quand l'enceinte est le siège d'une telle opération de traitement thermique.

On peut par ailleurs mentionner le fait que si dans la plupart des cas, le choix d'une atmosphère contrôlée pour un procédé conduit à la définition d'une teneur maximale en un élément donné dans cette atmosphère, il est des cas où l'on doit définir non seulement une teneur maximale mais également une teneur minimale, ce qui revient à définir une gamme tolérable de l'élément considéré dans l'atmosphère. On peut citer ici à titre illustratif le cas du brasage de composants électroniques sur circuit imprimé à l'aide d'une pâte à braser, pour lequel l'observation, dans le cas d'un brasage sous azote en remplacement de l'air, d'un certain nombre de défauts nouveaux tels que l'effet « tombstoning », également appelé effet « Manhattan » (soulèvement d'un composant électronique durant la phase de brasage conduisant à une ouverture du circuit électrique), a conduit à l'adoption de plages de taux d'oxygène tolérables dans l'azote afin d'éviter la présence de ces défauts. Cet exemple d'application sera détaillé plus loin dans le cadre de la présente demande.

La présente invention se propose de fournir un procédé de régulation d'atmosphère permettant de remédier à ces problèmes.

Le procédé de régulation d'atmosphère selon l'invention est basé sur l'utilisation de deux sources de gaz à teneur distincte en l'élément que l'on souhaite réguler : une première source de gaz à teneur « élevée » en l'élément considéré (source « basse pureté »), et une seconde source de gaz à teneur « réduite » en l'élément considéré(source « haute pureté »).

Les teneurs en l'élément considéré des deux sources de gaz doivent être inférieures à la teneur maximale admissible pour le procédé considéré.

On définit alors un premier seuil haut et un second seuil haut pour la teneur en l'élément considéré mesuré dans l'atmosphère de l'enceinte (le premier seuil étant supérieur au second), la régulation se faisant avec un mode d'injection constant ou sensiblement constant (en débit et en répartition des points d'injection dans l'enceinte) de la façon suivante : on passe de la première source de gaz à la seconde source de gaz lorsque la teneur en l'élément considéré dans l'atmosphère de l'enceinte dépasse le premier seuil haut, pour repasser à la première source de gaz (basse pureté) lorsque la teneur en l'élément considéré mesurée dans l'atmosphère de l'enceinte repasse en dessous du second seuil haut prédéfini.

On conçoit alors immédiatement les avantages très significatifs qu'apporte la solution de régulation selon l'invention qui est basée effectivement sur la régulation de la teneur en l'élément considéré dans le procédé, qui permet d'optimiser le choix de la teneur en l'élément de la source de gaz principale utilisée par rapport à une solution d'excès de qualité, tout en minimisant la consommation de gaz, la méthode permettant par ailleurs d'éviter les problèmes d'instabilité (turbulences, thermique etc..) liés aux variations de débit puisque la régulation se fait avec un mode d'injection sensiblement constant.

Le procédé de régulation selon l'invention, de la teneur de l'atmosphère d'une enceinte en un élément donné, a une valeur inférieure à une limite haute prédéterminée Lₕ, se caractérise alors par la mise en oeuvre des mesures suivantes :
a) on dispose d'au moins une première source de gaz et une seconde source de gaz, la teneur en ledit élément de la première source étant supérieure à la teneur en ledit élément de la seconde source ;
b) on alimente l'enceinte, en un régime que l'on peut qualifier de nominal, à l'aide de la première source de gaz, avec un débit nominal Qₙ ;
c) on mesure la teneur en ledit élément de l'atmosphère de l'enceinte ;
d) si le résultat de la mesure effectuée durant l'étape précédente est supérieur à un premier seuil haut déterminé (Lₕ - ε), on coupe l'alimentation de l'enceinte en première source de gaz pour alimenter l'enceinte en seconde source de gaz, à un débit égal ou sensiblement égal à Qₙ ;
e) on mesure la teneur en ledit élément de l'atmosphère de l'enceinte et on coupe l'alimentation de l'enceinte en seconde source de gaz pour revenir à l'alimentation de l'enceinte en régime nominal, dès que le résultat de la mesure est inférieur à un second seuil haut prédéterminé (Lₕ - α), le second seuil haut étant inférieur au premier seuil haut.

On conçoit que les valeurs des premiers et seconds seuils hauts devront être fixées au cas par cas selon notamment l'enceinte et le procédé considéré dont l'enceinte est le siège (taux de renouvellement de gaz pratiqué, etc...).

Comme il apparaîtra clairement à l'homme du métier, le procédé de régulation selon l'invention met en oeuvre un débit constant ou « sensiblement » constant, on conçoit en effet que l'on reste parfaitement dans le cadre de la présente invention lorsqu'une légère variation de débit intervient lors du passage d'une source de gaz à l'autre, par exemple du fait de la plus ou moins grande qualité des équipement de réglage de débit utilisés. On pourra alors considérer qu'une variation de débit inférieure ou égale à 10%, voire 15 %, reste dans le cadre de la présente invention qui est de mettre en oeuvre un débit constant ou « sensiblement » constant lors des changements de source de gaz.

Les mesures de teneurs selon l'invention pourront être selon le cas réalisées de façon continue dans le temps ou discontinue, à intervalle régulier ou non (« sampling »).

Selon un mode avantageux de mise en oeuvre de l'invention, on utilise un troisième seuil haut, de façon à ce que, si à un quelconque moment, la teneur en ledit élément mesurée dans l'atmosphère de l'enceinte est supérieure à ce troisième seuil, on procède au déclenchement d'une mesure d'alarme visuelle ou sonore, ou encore à une action déterminée sur les paramètres de fonctionnement de l'enceinte ou sur l'environnement de l'enceinte.

On comprend que ce troisième seuil peut être particulièrement utile pour détecter une situation où la teneur de l'atmosphère de l'enceinte s'élèverait anormalement haut malgré le passage à la seconde source de gaz (source « haute pureté »). Ce troisième seuil est alors en tout état de cause choisi au dessus de Lₕ - ε, mais sera choisi plus préférentiellement supérieur à Lₕ (Lₕ + m).

A titre illustratif, une telle action sur l'environnement de l'enceinte pourra par exemple consister dans l'arrêt de l'approvisionnement de l'enceinte en pièces à traiter compte tenu de la dégradation sensible de l'atmosphère au delà du troisième seuil haut.

Le procédé de régulation selon l'invention pourra être mis en oeuvre dans des conditions où le premier seuil haut est égal au second seuil haut (ε=α), mais de façon avantageuse, on utilisera deux valeurs de seuil haut différentes. En effet, la présence d'un second seuil haut inférieur au premier permet de mieux réaliser un bon compromis dans l'utilisation respective des deux sources de gaz :
- si ε=α : dans le cas où l'on serait en présence d'un régime de fuite, on prend le risque de trop souvent basculer d'une source de gaz à l'autre ce qui peut être problématique pour le matériel de mise en oeuvre des gaz;
- choisir ε # α permet d'autre part d'être en mesure de détecter un cas où la teneur en l'élément considéré dans l'atmosphère de l'enceinte redescendrait anormalement lentement malgré le passage de la première source de gaz à la seconde source de gaz plus pure.

On procédera alors avantageusement durant l'étape e), à une acquisition et un stockage des données de teneur mesurées, pour évaluer la pente de décroissance de la teneur mesurée avec le temps. On pourra alors effectivement, à l'aide d'une unité de traitement de ces données, évaluer et détecter les cas où la pente de décroissance de la teneur mesurée est anormalement faible, donnant lieu au fait que l'enceinte est maintenue sous alimentation en seconde source de gaz durant un temps anormalement long, sans pouvoir revenir au régime nominal.

On pourra alors, si la pente est inférieure à une valeur prédéterminée, procéder par exemple au déclenchement d'une des mesures suivantes :
- le déclenchement d'une alarme visuelle ou sonore;
- faire modifier par le système de traitement la valeur du second seuil haut (Lₕ - α), en l'occurrence trop bas (par exemple du fait d'une dégradation ponctuelle du fonctionnement de l'enceinte telle que due à une fuite ou encore à un courant d'air dans l'atelier comprenant l'enceinte de traitement), pour permettre de revenir à l'alimentation de l'enceinte en régime nominal.

On vient d'évoquer l'avantage qu'il y a selon l'invention à stocker les données de teneur obtenues durant l'étape e), mais on conçoit qu'il puisse être avantageux de stocker les mesures de teneur en l'élément considéré de l'atmosphère de l'enceinte durant tout ou partie du fonctionnement de cette enceinte, par exemple pour les raisons suivantes :
- afin d'être en mesure de remonter à l'origine d'un défaut observé sur certaines pièces traitées dans l'enceinte;
- pour évaluer la consommation de gaz de l'enceinte dans le temps;
- comme moyen de diagnostic du fonctionnement de l'enceinte, de la régulation etc...

Comme précédemment, un tel stockage pourra s'effectuer tant sur des mesures faites en continu que sur des mesures réalisées de façon discontinue (« sampling »).

Selon une des mises en oeuvre de l'invention, on dispose d'au moins une troisième source de gaz dont la teneur en ledit élément est supérieure à celle de la première source de gaz, pour effectuer le cas échéant une régulation de la teneur de l'atmosphère de l'enceinte en l'élément considéré entre une limite basse déterminée L_{b} et la limite haute prédéterminée Lₕ précédemment évoquée.

On pourra alors effectuer une telle régulation à l'aide de deux seuils bas prédéterminés L_{b}+ε₂ et L_{b}+α₂ de la façon suivante : si à un quelconque moment la teneur de l'atmosphère de l'enceinte en l'élément considéré est inférieure au premier seuil bas L_{b}+ε₂, on coupe l'alimentation de l'enceinte en première source de gaz pour alimenter l'enceinte en troisième source de gaz, à un débit égal ou sensiblement égal à Qₙ. On ne reviendra à l'alimentation de l'enceinte en régime nominal que lorsque le résultat de la mesure de la teneur de l'atmosphère de l'enceinte en l'élément considéré sera remonté au dessus du second seuil bas prédéterminé (L_{b} + α₂).

Un telle dégradation de l'atmosphère entraînant un abaissement de la teneur de l'atmosphère de l'enceinte en l'élément considéré en dessous du premier seuil bas L_{b}+ε₂, pourra par exemple intervenir dans le cas d'une variation dans le temps de la source de gaz utilisée. A titre illustratif, on peut citer les exemples suivants : une variation momentanée de la teneur résiduelle en oxygène de l'azote impur produit par un séparateur d'air par voie membranaire ou par adsorption sélective, ou encore la variation de l'atmosphère obtenue à la sortie d'un désoxygénateur du type DEOXO.

La situation respective des différents seuils utilisés est la suivante :
- le premier seuil bas est inférieur au second seuil bas,
- le premier seuil bas est inférieur à la limite haute Lₕ et au premier seuil haut Lₕ-ε;
- en ce qui concerne en revanche la situation respective du second seuil bas L_{b}+α₂ et du second seuil haut Lₕ-α, toutes les situations peuvent être envisagées

On pourra utiliser, à titre de troisième source de gaz, un source totalement indépendante des deux autres sources (source adjacente). Mais on pourra également utiliser, à titre de troisième source, une modification d'une des autres sources.

A titre illustratif, on peut citer l'exemple d'un cas où l'élément considéré que l'on souhaite contrôler est l'oxygène, où l'on pourra utiliser les sources de gaz suivantes :
- 1ere source : un azote impure à 10000 ppm d'oxygène résiduel obtenu par séparation d'air par perméation;
- 2e source : de l'azote d'origine cryogénique;
- 3e source : un mélange de l'azote impur de la première source et d'air, pour obtenir une teneur résiduelle en oxygène voisine par exemple de 30000ppm.

Selon une des mise en oeuvre de l'invention, l'élément considéré dont on régule la teneur dans l'atmosphère de l'enceinte est l'oxygène.

Selon une des mises en oeuvre de l'invention, les différentes sources de gaz mises en oeuvre sont des sources d'azote comportant des teneurs résiduelles en oxygène différenciées.

On conçoit que le procédé de régulation selon l'invention s'applique à des situations extrêmement variées d'enceintes mettant en oeuvre une atmosphère contrôlée.

On citera ici à titre purement illustratif le cas de fours où s'effectue une opération de traitement thermique, ou encore de fours ou machines où s'effectuent des opérations de brasage, dure ou tendre, par exemple de composants sur circuits électroniques.

L'installation de régulation de la teneur de l'atmosphère d'une enceinte en un élément donné à une valeur inférieure à une haute limite prédéterminée comprend les caractéristiques de la revendication 13.

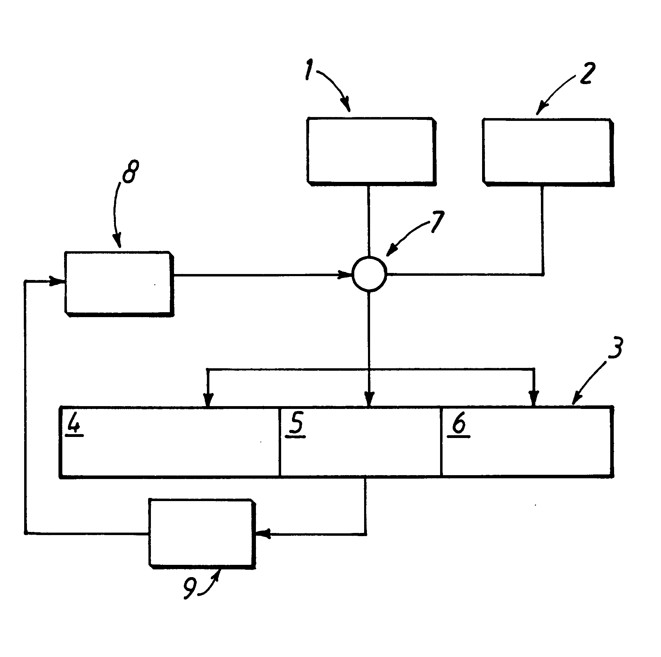

D'autres caractéristiques et avantages de la présente invention ressortiront de la description suivante de modes de réalisation donnée à titre illustratif mais nullement limitatif, faite en relation avec la figure annexée représentant une vue schématique d'une installation convenant pour la mise en oeuvre du procédé selon l'invention.

La figure annexée illustre le cas de la mise en oeuvre du procédé selon l'invention pour réguler la teneur en oxygène d'une atmosphère à base d'azote utilisée pour le brasage de composants électroniques dans un four de refusion.

On reconnaît sur la figure la présence d'un four de refusion 3, présentant essentiellement trois zones : une zone de préchauffage 4, une zone 5 où s'établit le pic de refusion, et une zone de refroidissement 6.

Le four 3 est alimenté au niveau de ses trois zones à partir de deux sources de gaz, une première source de gaz 1 et une seconde source de gaz 2.

La première source de gaz 1, « basse pureté », est ici constituée d'un séparateur d'air par voie membranaire, produisant un azote impure comportant de l'ordre de 10.000 ppm d'oxygène résiduel. La seconde source de gaz 2, « haute pureté », est ici constituée d'une réserve d'azote liquide produit par voie cryogénique, dont la teneur résiduelle en oxygène est inférieure à 10 ppm.

Un analyseur d'oxygène 9, effectuant des analyses de la teneur en oxygène de l'atmosphère du four au niveau d'au moins une des zones du four, préférentiellement de la zone 5 du pic de refusion, permet, en transmettant les informations de teneur en oxygène recueillies à un système de régulation 8, agissant lui-même sur un système de vanne 7, de diriger sur chacune des zones du four, du gaz en provenance de l'une ou l'autre des sources de gaz 1 et 2 selon la teneur en oxygène mesurée.

Une installation telle que celle décrite dans le cadre de la figure annexée a été utilisée pour la réalisation d'exemples de mise en oeuvre comparatifs ou selon l'invention, qui sont décrits en détail ci-dessous.

### Exemple 1 - Comparatif :

Ce premier exemple illustre le cas d'un four de refusion devant être alimenté en azote, afin d'atteindre une teneur résiduelle en oxygène dans l'atmosphère d'azote du four n'excédant pas une limite haute de 2 % (20.000 ppm).

Pour ce premier exemple, la solution « excès de qualité » a été mise en oeuvre, par l'utilisation d'une source d'azote d'origine cryogénique (teneur résiduelle en oxygène strictement inférieure à 10 ppm), avec un débit proche de 30m³/h, permettant d'atteindre dans l'atmosphère du four une teneur résiduelle en oxygène proche de 500 ppm, donc effectivement largement inférieure à la limite haute que s'est fixé le site utilisateur.

### Exemple 2 - Comparatif :

Cet exemple 2 met en oeuvre, pour le même cas que celui décrit dans le cadre de l'exemple 1, la solution « débit régulé ».

On met ici en oeuvre une source d'azote d'origine cryogénique (teneur en oxygène résiduelle du gaz strictement inférieure à 10 ppm), dans les conditions de débit suivantes :
- un débit de 20 m³/h d'azote, permettant d'atteindre une teneur résiduelle en oxygène dans l'atmosphère du four de l'ordre de 10000 ppm ;
- lorsque la teneur en oxygène dans l'atmosphère du four dépasse un seuil de 15000 ppm, le débit d'azote d'origine cryogénique injecté dans le four est immédiatement porté à 40 m³/h, jusqu'à ce que la teneur en oxygène redescende en dessous de 5.000 ppm.

### Exemple 3 - Selon l'invention :

Le même cas de four que celui décrit précédemment a été ici traité selon l'invention dans les conditions suivantes :
- une première source de gaz « impure » : : de l'azote impur obtenu par séparation d'air par perméation dont la teneur résiduelle en oxygène est voisine de 10000 ppm ;
- une seconde source de gaz « haute pureté» : de l'azote d'origine cryogénique à teneur résiduelle en oxygène inférieure à 10 ppm ;
- on a utilisé un premier seuil haut (Lₕ-ε) selon l'invention à 15000 ppm O₂, et un second seuil haut selon l'invention (Lₕ-α) à 5000 ppm O₂ ;
- on met alors en oeuvre selon l'invention un débit constant Qₙ de 25m³/h, dans les conditions de régulation suivantes :
   - si la mesure de la teneur en oxygène de l'atmosphère du four est strictement inférieure à 15000 ppm, on met en oeuvre le débit Qₙ de la première source de gaz 1 ;
   - si la mesure de la teneur résiduelle en oxygène de l'atmosphère du four est supérieure ou égale à 15000 ppm, on met en oeuvre la source de gaz 2, jusqu'à ce que la teneur en oxygène mesurée soit redescendue en dessous de 5000 ppm.
- de telles conditions de fonctionnement ont permis d'obtenir de façon parfaitement optimisée, tant en débit de gaz mis en oeuvre que de qualité des sources de gaz utilisées, une teneur résiduelle en oxygène dans l'atmosphère du four se situant toujours en deçà de la limite haute admissible telle que fixée par le site utilisateur considéré.

Comme il apparaîtra clairement à l'homme du métier, si dans l'exemple considéré la mesure de la teneur en oxygène s'est faite en un seul point du four, en l'occurrence au niveau du pic de refusion, des mesures d'oxygène pourraient se faire sans difficulté en plusieurs endroits du four, sans sortir pour cela du cadre de l'invention.

De même, si l'exemple décrit l'a été en utilisant deux sources particulières de gaz (cryogénique et membranaire), on conçoit que d'autres configurations sont parfaitement envisageables, par exemple une première source d'azote impur obtenu par séparation d'air par voie membranaire ou absorption, et une seconde source de gaz obtenue en désoxydant cette première source sur un système DEOXO par réaction avec l'hydrogène ou un hydrocarbure.

### Exemple 4 - Selon l'invention - Avec seuils haut et bas :

Cet exemple de mise en oeuvre selon l'invention a été obtenu dans le cas d'un four de refusion fonctionnant sous atmosphère à base d'azote, dans une situation où l'on souhaite remédier à l'observation de défauts de type « tombstoning ».

Rappelons ici que l'utilisation d'atmosphères à base d'azote dans des fours de refusion est maintenant classique, permettant de réduire le taux d'oxydation des surfaces métalliques à braser, mais également dans une moindre mesure d'influencer les tensions superficielles de l'alliage de brasage lorsque celui-ci est à l'état liquide au niveau du pic de refusion.

De telles atmosphères à base d'azote conduisent de façon connue à une nette amélioration de la qualité des joints de brasure, en particulier compte tenu de la tendance actuelle de l'industrie de la micro-électronique d'aller vers une plus grande miniaturisation des ensembles électroniques, et donc vers l'utilisation de composants de tailles de plus en plus réduites, notamment à pas très faible des connections électriques (« fine pitch »).

Différentes études ont montré que cette tendance à l'utilisation de composants de très petite taille constitue un des facteurs favorisant l'apparition du défaut « tombstoning ».

Si différents remèdes ont été proposés pour apporter une solution à l'apparition de ces défauts, ils constituent incontestablement des modifications relativement contraignantes, obligeant par exemple à revoir le design du circuit imprimé ou encore à modifier certains paramètres du procédé tels que profil de température ou encore épaisseur de pâte à braser déposée.

On se reportera pour plus de détails à l'article de Nobuo Kamada paru dans la revue J. Elect. Engineering en février 1994 (page 112), article qui met également en évidence le rôle probable du niveau d'oxygène dans l'atmosphère à base d'azote utilisée, tel qu'influençant la tension de surface de la brasure.

On déduit de l'ensemble de ces travaux que certains procédés de brasage par refusion de composants sur circuits électroniques, doivent respecter une teneur résiduelle en oxygène dans l'azote du procédé non seulement inférieure à une limite haute mais également supérieure à une limite basse, ce qui revient à respecter une gamme de teneur résiduelle en oxygène :
- une limite haute en oxygène permettant de conserver des conditions non oxydantes vis a vis du système brasé;
- une limite basse en oxygène permettant de limiter l'apparition de certains défauts tels que l'effet « tombstoning ».

Les travaux menés à bien par la Demanderesse ont ainsi permis de démontrer que selon la composition de la pâte à braser utilisée (notamment liée à son taux de résidu ou encore au fait qu'elle est ou non halogénée), différentes gammes d'oxygène sont recommandées.

On définit généralement le taux de résidu d'une pâte comme correspondant à la proportion de flux qui reste après brasage sur le circuit par rapport à la quantité initialement sérigraphiée.
- pour des pâtes à haut résidus (supérieur à 45%) avec composés halogénés : une gamme de teneur résiduelle en oxygène se situant entre 1.000 ppm et 20.000 ppm donne le plus souvent des résultats très satisfaisants;
- pour des pâtes haut résidu non halogénées (supérieur à 45%) : une gamme de teneur résiduelle en oxygène se situant entre 500 ppm et 20.000 ppm donne le plus souvent des résultats très satisfaisants;
- pour des pâtes faible résidus non halogénées (inférieurs à 45%) : une gamme de teneur résiduelle en oxygène se situant entre 500 ppm et 5.000 ppm donne le plus souvent des résultats très satisfaisants.

Le procédé de régulation selon l'invention a pu être mis en oeuvre avec succès dans le cas de ces trois types de pâte à braser, donc dans le cas de ces trois types de gamme d'oxygène, avec l'intervention de seuils haut et bas (Lₕ-ε, Lₕ-α, L_{b}+ε₂, L_{b}+α₂).

On illustrera dans ce qui suit le cas d'un site utilisateur utilisant une pâte à braser de type haut résidu (≅ 60%) halogéné. Des tests de brasage ont permis de mettre en évidence qu'une atmosphère à base d'azote comportant moins de 10000 ppm d'oxygène permettait, pour cette pâte à braser, de fournir le meilleur compromis en terme de mouillage, microbillage ou encore taux de défauts « classiques » (non mouillage, pontage...).

Par ailleurs, il a pu être démontré que pour les circuits traités, les défauts de type « tombstoning » apparaissaient pour des teneurs en oxygène résiduel dans l'atmosphère du four inférieures à 2000 ppm.

Il était donc nécessaire de maintenir cette teneur en oxygène résiduel dans l'atmosphère du four toujours dans la gamme 2000 ppm - 10000 ppm. Pour cela, le procédé de régulation selon l'invention a été mis en oeuvre dans les conditions suivantes :
- source de gaz N°1 : de l'azote impur à 5000 ppm d'oxygène résiduel obtenu par désoxygénation catalytique (DEOXO) d'un azote produit par voie membranaire et comportant 1% d'oxygène résiduel;
- source de gaz N°2 : de l'azote d'origine cryogénique;
- source de gaz N°3 : de l'azote comportant 1% d'oxygène résiduel, tel qu'obtenu à la sortie du séparateur membranaire de la première source, avant épuration DEOXO;
- seuils mis en oeuvre :
   - premier seuil haut (Lₕ-ε) : 8000 ppm;
   - second seuil haut (Lₕ-α) : 6000 ppm;
   - premier seuil bas (L_{b}+ε₂) : 3000 ppm;
   - second seuil bas (L_{b}+α₂) : 4000 ppm.

## Revendications

1. Procédé de régulation de la teneur de l'atmosphère d'une enceinte (3) en un élément donné, à une valeur inférieure à une limite haute prédéterminée (Lₕ), **caractérisé par** la mise en oeuvre des mesures suivantes :
a) on dispose d'au moins une première source de gaz (1) et une seconde source de gaz (2), la teneur en ledit élément de la première source étant supérieure à la teneur en ledit élément de la seconde source ;
b) on alimente l'enceinte, en régime nominal, à l'aide de la première source de gaz, avec un débit nominal Qₙ ;
c) on mesure (9) la teneur en ledit élément de l'atmosphère de l'enceinte au niveau d'au moins un des points de l'enceinte;
d) si le résultat de la mesure effectuée durant l'étape c) est supérieur à un premier seuil haut prédéterminé (Lₕ-ε), on coupe (8,7) l'alimentation de l'enceinte en première source de gaz pour alimenter l'enceinte en seconde source de gaz, à un débit égal ou sensiblement égal à Qₙ ;
e) on mesure (9) la teneur en ledit élément de l'atmosphère de l'enceinte au niveau d'au moins ledit point de l'enceinte, et on coupe (8,7) l'alimentation de l'enceinte en seconde source pour revenir à l'alimentation de l'enceinte en régime nominal dès que le résultat de la mesure est inférieur à un second seuil haut prédéterminé (Lₕ-α).

2. Procédé selon la revendication 1, **caractérisé en ce que**, si lors d'une des étapes de mesure, le résultat de la mesure est supérieur à un troisième seuil haut prédéterminé (Lₕ + m) au moins superieur au premier seuil haut (Lₕ-ε), on procède au déclenchement d'une mesure d'alarme visuelle ou sonore, ou encore à une action déterminée sur les paramètres de fonctionnement de l'enceinte ou sur l'environnement de l'enceinte.

3. Procédé selon la revendication 2, **caractérisé en ce que** l'enceinte est le siège d'une opération de traitement de pièces qui transitent par l'enceinte pour y subir ledit traitement, ladite action sur l'environnement de l'enceinte consistant à stopper l'approvisionnement de l'enceinte en pièces à traiter.

4. Procédé selon l'une des revendications 1 à 3, **caractérisé en ce que** l'on procède durant l'étape e) à une acquisition et stockage des données mesurées, pour permettre l'évaluation de la pente de décroissance de la teneur mesurée avec le temps.

5. Procédé selon la revendication 4, **caractérisé en ce que** si la vitesse de décroissance de la teneur mesurée est inférieure à une valeur prédéterminée, on procède au déclenchement d'une mesure d'alarme visuelle ou sonore.

6. Procédé selon la revendication 4, **caractérisé en ce que** si la vitesse de décroissance de la teneur mesurée est inférieure à une valeur prédéterminée, on modifie la valeur du second seuil haut (Lₕ - α) pour permettre le retour à l'alimentation de l'enceinte en première source de gaz en régime nominal.

7. Procédé selon l'une des revendications 1 à 6, **caractérisé en ce que** la valeur du premier seuil haut est égale à la valeur du second seuil haut.

8. Procédé selon l'une des revendications 1 à 7, **caractérisé en ce que** on dispose d'au moins une troisième source de gaz dont la teneur en ledit élément est supérieure à la teneur en ledit élément de la première source de gaz, pour effectuer le cas échéant la régulation de la teneur de l'atmosphère de l'enceinte en ledit élément entre une limite basse prédéterminée L_{b} et la limite haute prédéterminée Lₕ, de la façon suivante :
i) si le résultat de la mesure effectuée durant l'étape c) est inférieur à un premier seuil bas prédéterminé L_{b}+ε₂, on coupe l'alimentation de l'enceinte en première source de gaz pour alimenter l'enceinte en troisième source de gaz, à un débit égal ou sensiblement égal à Qₙ ;
ii) on mesure la teneur en ledit élément de l'atmosphère de l'enceinte et l'on coupe l'alimentation de l'enceinte en troisième source de gaz pour revenir à l'alimentation de l'enceinte en régime nominal dès que le résultat de la mesure est supérieur à un second seuil bas prédéterminé (L_{b}+α₂),
le premier seuil bas étant inférieur au second seuil bas.

9. Procédé selon l'une des revendications 1 à 8, **caractérisé en ce que** ledit élément dont on régule la teneur est l'oxygène.

10. Procédé selon la revendication 9, **caractérisé en ce que** lesdites sources de gaz sont des sources d'azote comportant des teneurs résiduelles en oxygène différentes.

11. Procédé selon la revendication 10, **caractérisé en ce que** ladite seconde source de gaz est de l'azote d'origine cryogénique, et **en ce que** ladite première source de gaz est un azote impur obtenu par séparation d'air par perméation sélective ou adsorption.

12. Procédé selon l'une des revendications 1 à 11, **caractérisé en ce que** l'enceinte est un four où s'effectue une opération de traitement thermique ou une opération de brasage.

13. Installation de régulation de la teneur de l'atmosphère d'une enceinte (3) en un élément donné, à une valeur inférieure à une limite haute prédéterminée (Lₕ), comprenant :
i) au moins une première source de gaz (1) et une seconde source de gaz (2), pouvant être reliées à l'enceinte, la teneur en ledit élément de la première source étant supérieure à la teneur en ledit élément de la seconde source ;
j) des moyens (7) d'alimentation de l'enceinte selon un régime nominal en première source de gaz à un débit nominal Qₙ;
k) des moyens (9) d'analyse de la teneur en ledit élément de l'atmosphère de l'enceinte au niveau d'au moins un des points de l'enceinte;
l) des moyens (8, 7) aptes à, si le résultat de l'analyse de la dite teneur est supérieur à un premier seuil haut prédéterminé (Lₕ-ε), couper l'alimentation de l'enceinte en première source de gaz pour alimenter l'enceinte en seconde source de gaz, à un débit égal ou sensiblement égal à Qₙ , et à revenir à l'alimentation de l'enceinte en régime nominal dès que le résultat de l'analyse de la dite teneur est inférieur à un second seuil haut prédéterminé (Lₕ-α).

## Patentansprüche

1. Verfahren zur Regulierung des Gehalts an einem gegebenen Element in der Atmosphäre eines Behältnisses (3) auf einen unter einem vorgegebenen oberen Grenzwert (Lₕ) liegenden Wert, **dadurch gekennzeichnet, daß** man die folgenden Maßnahmen trifft:
a) man sieht mindestens eine erste Gasquelle (1) und eine zweite Gasquelle (2) vor, wobei der Gehalt an dem Element in der ersten Quelle größer als der Gehalt an dem Element in der zweiten Quelle ist;
b) man speist das Behältnis im Nominalbetrieb mit Hilfe der ersten Gasquelle mit einer Nominaldurchflußrate Qₙ;
c) man mißt (9) an mindestens einem Punkt im Behältnis den Gehalt an dem Element in der Atmosphäre des Behältnisses;
d) wenn das Ergebnis der in Schritt c) vorgenommenen Messung über einem ersten vorgegebenen oberen Schwellenwert (Lₕ-ε) liegt, unterbricht (8, 7) man die Speisung des Behältnisses aus der ersten Gasquelle und speist das Behältnis aus der zweiten Gasquelle mit einer Durchflußrate, die gleich oder im wesentlichen gleich Qₙ ist;
e) man mißt (9) an mindestens einem Punkt im Behältnis den Gehalt an dem Element in der Atmosphäre des Behältnisses und unterbricht (8,7) die Speisung des Behältnisses aus der zweiten Quelle zwecks Wiederaufnahme der Speisung des Behältnisses im Nominalbetrieb, sobald das Ergebnis der Messung unter einem zweiten vorgegebenen oberen Schwellenwert (Lₕ-α) liegt.

2. Verfahren nach Anspruch 1, **dadurch gekennzeichnet, daß** man dann, wenn bei einem der Meßschritte das Ergebnis der Messung über einem dritten vorgegebenen oberen Schwellenwert (Lₕ + m), der zumindest größer als der erste obere Schwellenwert (Lₕ-ε) ist, liegt, einen optischen oder akustischen Alarm auslöst oder auf die Betriebsparameter des Behältnisses oder die Umgebung des Behältnisses auf festgelegte Art und Weise einwirkt.

3. Verfahren nach Anspruch 2, **dadurch gekennzeichnet, daß** es sich bei dem Behältnis um den Ort eines Prozesses zur Behandlung von Teilen handelt, welche das Behältnis durchlaufen und dabei darin der Behandlung unterzogen werden, wobei die Einwirkung auf die Umgebung des Behältnisses darin besteht, daß man die Zufuhr von zu behandelnden Teilen in das Behältnis stoppt.

4. Verfahren nach einem der Ansprüche 1 bis 3, **dadurch gekennzeichnet, daß** man in Schritt e) Meßwerte erfaßt und speichert, um eine Abschätzung der Geschwindigkeit der Abnahme des gemessenen Gehalts mit der Zeit zu ermöglichen.

5. Verfahren nach Anspruch 4, **dadurch gekennzeichnet, daß** man dann, wenn die Geschwindigkeit der Abnahme des gemessenen Gehalts unter einem vorgegebenen Wert liegt, einen optischen oder akustischen Alarm auslöst.

6. Verfahren nach Anspruch 4, **dadurch gekennzeichnet, daß** man dann, wenn die Geschwindigkeit der Abnahme des gemessenen Gehalts unter einem vorgegebenen Wert liegt, den Wert des zweiten oberen Schwellenwerts (Lₕ - α) modifiziert, um eine Wiederaufnahme der Speisung des Behältnisses aus der ersten Gasquelle im Nominalbetrieb zu ermöglichen.

7. Verfahren nach einem der Ansprüche 1 bis 6, **dadurch gekennzeichnet, daß** der Wert des ersten oberen Schwellenwerts gleich dem Wert des zweiten oberen Schwellenwerts ist.

8. Verfahren nach einem der Ansprüche 1 bis 7, **dadurch gekennzeichnet, daß** man mindestens eine dritte Gasquelle vorsieht, in der der Gehalt an dem Element über dem Gehalt an dem Element in der ersten Gasquelle liegt, damit man gegebenenfalls den Gehalt an dem Element in der Atmosphäre des Behältnisses zwischen einem vorgegebenen unteren Grenzwert L_{b} und dem vorgegebenen oberen Grenzwert Lₕ folgendermaßen regulieren kann:
i) wenn das Ergebnis der in Schritt c) vorgenommenen Messung unter einem ersten vorgegebenen unteren Schwellenwert L_{b}+ε₂ liegt, unterbricht man die Speisung des Behältnisses aus der ersten Gasquelle und speist das Behältnis aus der dritten Gasquelle mit einer Durchflußrate, die gleich oder im wesentlichen gleich Qₙ ist;
ii) man mißt den Gehalt an dem Element in der Atmosphäre des Behältnisses und unterbricht die Speisung des Behältnisses aus der dritten Gasquelle zwecks Wiederaufnahme der Speisung des Behältnisses im Nominalbetrieb, sobald das Ergebnis der Messung unter einem zweiten vorgegebenen unteren Schwellenwert (L_{b}+α₂) liegt,
wobei der erste untere Schwellenwert unter dem zweiten unteren Schwellenwert liegt.

9. Verfahren nach einem der Ansprüche 1 bis 8, **dadurch gekennzeichnet, daß** es sich bei dem Element, dessen Gehalt man reguliert, um Sauerstoff handelt.

10. Verfahren nach Anspruch 9, **dadurch gekennzeichnet, daß** es sich bei den Gasquellen um Quellen von Stickstoff mit unterschiedlichen Restsauerstoffgehalten handelt.

11. Verfahren nach Anspruch 10, **dadurch gekennzeichnet, daß** es sich bei der zweiten Gasquelle um kryogen erzeugten Stickstoff und bei der ersten Gasquelle um durch Luftzerlegung mittels selektiver Permeation oder Adsorption erhaltenen unreinen Stickstoff handelt.

12. Verfahren nach einem der Ansprüche 1 bis 11, **dadurch gekennzeichnet, daß** es sich bei dem Behältnis um einen Ofen zur Durchführung eines Wärmebehandlungsprozesses oder eines Lötprozesses handelt.

13. Vorrichtung zur Regulierung des Gehalts an einem gegebenen Element in der Atmosphäre eines Behältnisses (3) auf einen unter einem vorgegebenen oberen Grenzwert (Lₕ) liegenden Wert, enthaltend:
i) mindestens eine erste Gasquelle (1) und eine zweite Gasquelle (2), die mit dem Behältnis verbunden sein können, wobei der Gehalt an dem Element in der ersten Quelle größer als der Gehalt an dem Element in der zweiten Quelle ist;
j) Einrichtungen (7) zur Speisung des Behältnisses gemäß Nominalbetrieb aus der ersten Gasquelle mit einer Nominaldurchflußrate Qₙ;
k) Einrichtungen (9) zur Analyse des Gehalts an dem Element in der Atmosphäre des Behältnisses an mindestens einem Punkt im Behältnis;
l) Einrichtungen (8, 7), die dazu befähigt sind, dann, wenn das Ergebnis der Analyse des Gehalts über einem ersten vorgegebenen oberen Schwellenwert (Lₕ-ε) liegt, die Speisung des Behältnisses aus der ersten Gasquelle zu unterbrechen und das Behältnis aus der zweiten Gasquelle mit einer Durchflußrate, die gleich oder im wesentlichen gleich Qₙ ist, zu speisen, und die Speisung des Behältnisses im Nominalbetrieb wieder aufzunehmen, sobald das Ergebnis der Analyse des Gehalts unter einem zweiten vorgegebenen oberen Schwellenwert (Lₕ-α) liegt.

## Claims

1. Method of regulating the content of a given element in the atmosphere of an enclosure (3) at a value below a predetermined upper limit (Lₕ), **characterized by** implementing the following steps:
a) at least a first gas source (1) and a second gas source (2) are provided, the content of the said element of the first source being higher than the content of the said element of the second source;
b) the enclosure is supplied, under nominal conditions, with a nominal flow rate Qₙ using the first gas source;
c) the content of the said element in the atmosphere of the enclosure at at least one of the points in the enclosure is measured (9);
d) if the result of the measurement taken during step c) is greater than a first predetermined upper threshold (Lₕ-ε), the supply to the enclosure from the first gas source is cut (8, 7) in order to supply the enclosure from the second gas source with a flow rate equal or substantially equal to Qₙ;
e) the content of the said element in the atmosphere of the enclosure at at least the said point of the enclosure is measured (9) and the supply to the enclosure from the second source is cut (8, 7) in order to resume the supply to the enclosure under nominal conditions as soon as the result of the measurement is less than a second predetermined upper threshold (Lₕ-α).

2. Method according to Claim 1, **characterized in that**, if during one of the measurement steps the result of the measurement is greater than a third predetermined upper threshold (Lₕ + m) at least above the first upper threshold (Lₕ-ε), a step of triggering a visual or audible alarm, or else of acting in a defined manner on the operating parameters of the enclosure or on the environment of the enclosure, is taken.

3. Method according to Claim 2, **characterized in that** the enclosure is the seat of an operation for the treatment of workpieces which pass through the enclosure in order to undergo the said treatment therein, the said action on the environment of the enclosure consisting in stopping the feeding of the enclosure with the workpieces to be treated.

4. Method according to one of Claims 1 to 3, **characterized in that**, during step e), acquisition and storage of the measured data takes place in order to allow evaluation of the rate of decrease of the content measured over time.

5. Method according to Claim 4, **characterized in that** if the rate of decrease of the measured content is less than a predetermined value, a step of triggering a visual or audible alarm is taken.

6. Method according to Claim 4, **characterized in that** if the rate of decrease of the measured content is less than a predetermined value, the value of the second upper threshold (Lₕ-α) is modified in order to allow the return to the enclosure being supplied from the first gas source under nominal conditions.

7. Method according to one of Claims 1 to 6, **characterized in that** the value of the first upper threshold is equal to the value of the second upper threshold.

8. Method according to one of Claims 1 to 7, **characterized in that** at least a third gas source is provided, the content of the said element of which is higher than the content of the said element of the first gas source, in order to regulate, if necessary, the content of the said element in the atmosphere of the enclosure between a predetermined lower limit L_{b} and the predetermined upper limit Lₕ in the following manner:
i) if the result of the measurement taken during step c) is less than a first predetermined lower threshold (L_{b}+ε₂), the supply to the enclosure from the first gas source is cut in order to supply the enclosure from the third gas source, with a flow rate equal or substantially equal to Qₙ;
ii) the content of the said element in the atmosphere of the enclosure is measured and the supply to the enclosure from the third gas source is cut in order to resume supplying the enclosure under nominal conditions as soon as the result of the measurement is greater than a second predetermined lower threshold (L_{b}+α₂), the first lower threshold being below the second lower threshold.

9. Method according to one of Claims 1 to 8, **characterized in that** the said element whose content is regulated is oxygen.

10. Method according to Claim 9, **characterized in that** the said gas sources having different residual oxygen contents are nitrogen sources.

11. Method according to Claim 10, **characterized in that** the second gas source is a source of nitrogen of cryogenic origin and **in that** the said first gas source is impure nitrogen obtained from separation of air by absorption or selective permeation.

12. Method according to one of Claims 1 to 11, **characterized in that** the enclosure is a furnace or oven in which a heat treatment operation or a soldering operation is carried out.

13. Plant for regulating the content of a given element in the atmosphere of an enclosure (3) at a value below a predetermined upper limit (Lₕ), which comprises:
i) at least a first gas source (1) and a second gas source (2), which may be connected to the enclosure, the content of the said element of the first source being higher than the content of the said element of the second source;
j) means (7) for supplying the enclosure under nominal conditions from the first gas source with a nominal flow rate Qₙ;
k) means (9) for analysing the content of the said element in the atmosphere of the enclosure at at least one of the points of the enclosure;
l) means (8, 7) capable, if the result of the analysis of the said content is greater than a first predetermined upper threshold (Lₕ-ε), of cutting the supply to the enclosure from the first gas source in order to supply the enclosure from the second gas source, with a flow rate equal or substantially equal to Qₙ, and in resuming the supply to the enclosure under nominal conditions as soon as the result of the analysis of the said content is less than a second predetermined upper threshold (Lₕ-α).
